# EUROPÄISCHE PATENTSCHRIFT

(11) **EP 2 792 928 B1**
(45) Veröffentlichungstag und Bekanntmachung des Hinweises auf die Patenterteilung: **28.10.2015**
(21) Anmeldenummer: 14150012.4
(22) Anmeldetag: 02.01.2014
(51) Int. Cl.: F16P 1/02, B65C 9/00, F16P 3/08

(54) **Behandlungsmaschine für Behälter**
Handling machine for containers
Machine de traitement pour récipients

(30) Priorität: 15.04.2013 DE 102013206682
(43) Veröffentlichungstag der Anmeldung: 22.10.2014
(73) Patentinhaber: Krones AG, 93073 Neutraubling (DE)
(72) Erfinder: Hafner, Dieter, 93073 Neutraubling (DE)
(74) Vertreter: Grünecker Patent- und Rechtsanwälte PartG mbB

(56) Entgegenhaltungen:
- WO-A1-2010/099822
- WO-A1-2013/001551
- GB-A- 1 533 573

## Beschreibung

Die Erfindung betrifft eine Behandlungsmaschine für Behälter, insbesondere für Flaschen, nach dem Oberbegriff des Anspruchs 1, wie bekannt aus der WO 2010/099822 A1.

Behandlungsmaschinen für Behälter, wie beispielsweise Etikettiermaschinen, vom Rundläufertyp benötigen aufgrund der üblicherweise schnell rotierenden Maschinenkomponenten und zum Einhalten gängiger Sicherheitsvorschriften seitliche Hebeschutzverkleidungen im Bereich des Behältertisches und Maschinenverkleidungen an dem darunter liegenden Untergestell. Die Maschinenverkleidungen sind üblicherweise fest mit dem Untergestell verschraubt und mittels Sicherheitskontakten oder dergleichen gegen ein unzulässiges Abnehmen während des Maschinenbetriebs gesichert.

Zwischen den Behältertisch und die Maschinenverkleidung können beim Maschinenbetrieb, bei Produktionsumstellungen oder dergleichen Kleinteile, wie beispielsweise Verschlusskappen, Scherben oder Etiketten nach unten fallen. Für die Reinigung des darunter liegenden Bodens müssen dann in der Regel die jeweiligen Segmente der Maschinenverkleidung abgeschraubt werden. Dies verursacht einen erheblichen Aufwand bei der Demontage / Montage der Verkleidungsbestandteile. Außerdem müssen diese jeweils separat durch Sicherheitskontakte gegen eine unzulässige Demontage während des Maschinenbetriebs gesichert werden.

Es wäre daher wünschenswert, die Reinigung zu vereinfachen und/oder den apparativen Aufwand für Schalter und Schaltkreise zur Sicherung der Maschinenverkleidung zu reduzieren.

Die gestellte Aufgabe wird mit einer Behandlungsmaschine nach Anspruch 1 gelöst. Demnach umfasst diese einen drehbaren Behältertisch, wenigstens eine seitlich um den Behältertisch ausgebildete Hebeschutzverkleidung und wenigstens eine unterhalb der Hebeschutzverkleidung an einem Untergestell befestigte seitliche Maschinenverkleidung. Erfindungsgemäß lässt sich die Maschinenverkleidung an dem Untergestell vertikal verschieben. Durch ein Hochschieben der Maschinenverkleidung kann ein Bereich unterhalb der Behandlungsmaschine auf einfache Weise zugänglich gemacht werden. Insbesondere ist ein Abmontieren der Maschinenverkleidung zu Reinigungszwecken oder dergleichen in einem unteren Bereich der Behandlungsmaschine dann entbehrlich.

Vorzugsweise ist die Hebeschutzverkleidung als oberer mechanischer Anschlag für die Maschinenverkleidung ausgebildet. Darunter ist zu verstehen, dass sich die Maschinenverkleidung nicht gegen den Widerstand der Hebeschutzverkleidung nach oben schieben lässt. Anders gesagt lässt sich die Maschinenverkleidung nicht bei abgesenkter Hebeschutzverkleidung in unzulässiger Weise nach oben schieben. Somit kann die Maschinenverkleidung auf einfache Weise während des Betriebs der Behandlungsmaschine gegen ein Verschieben gesichert werden.

Vorzugsweise überlappt eine obere Stirnfläche der Maschinenverkleidung in der Draufsicht mit einer unteren Stirnfläche der Hebeschutzverkleidung. Der mechanische Anschlag lässt sich dann auf besonders einfache Weise realisieren, insbesondere ohne zusätzliche gegeneinander anschlagende Anbauteile.

Vorzugsweise sind die Hebeschutzverkleidung und die Maschinenverkleidung in der Draufsicht in Form von Kreisbögen oder Kreisringsegmenten ausgebildet. Derartig segmentierte Verkleidungen lassen sich auf flexible Weise an unterschiedlichen Positionen entlang des Maschinenumfangs anbringen. Für die Hebeschutzverkleidung ist dann beispielsweise ein in der Draufsicht ebenfalls als Kreisbogen ausgebildeter Halterahmen ausgebildet. Vorzugsweise können mehrere Segmente der Hebeschutzverkleidung an frei wählbaren Maschinenwinkelpositionen der Behandlungsmaschine befestigt werden. Somit kann die Hebeschutzverkleidung insgesamt auf vielfältige Weise an unterschiedliche anzudockende Behandlungsaggregate angepasst werden.

Vorzugsweise setzt sich die Maschinenverkleidung in umfänglicher Richtung aus wenigstens zwei separat in vertikaler Richtung verschiebbaren Verkleidungssegmenten zusammen. Die einzelnen Verkleidungssegmente lassen sich vergleichsweise einfach handhaben und/oder austauschen.

Vorzugsweise ist die Maschinenverkleidung derart ausgebildet, dass sie in einer unteren Betriebsposition einen vorgegebenen Sicherheitsabstand zur Standfläche, beispielsweise zum Boden, nicht überschreitet. Der Sicherheitsabstand beträgt beispielsweise höchstens 10 cm, insbesondere höchstens 5 cm. Der Sicherheitsabstand verhindert beispielsweise, dass Bedienpersonal unter der Maschinenverkleidung hindurch greifen und rotierende Maschinenkomponenten berühren kann.

Vorzugsweise kann die Maschinenverkleidung werkzeuglos aus einer unteren Betriebsposition nach oben geschoben werden. Darunter ist insbesondere zu verstehen, dass die Maschinenverkleidung bei angehobener Hebeschutzverkleidung aus der unteren Betriebsposition ohne das Abmontieren oder Lösen von Sicherungselementen, wie beispielsweise Schrauben, verschoben werden kann.

Vorzugsweise kann die Maschinenverkleidung bis in eine obere Instandhaltungsposition verschoben werden. Dies ist nur möglich, nachdem die zugeordnete Hebeschutzverkleidung entsprechend angehoben wurde. In der Instandhaltungsposition der Maschinenverkleidung ist insbesondere der Boden unter der Behandlungsmaschine für Reinigungszwecke zugänglich.

Vorzugsweise umfasst die erfindungsgemäße Behandlungsmaschine ferner eine Arretiereinrichtung zum Arretieren der Maschinenverkleidung in der oberen Instandhaltungsposition. Dies erleichtert die werkzeuglose Handhabung der Maschinenverkleidung. Insbesondere wird ein versehentliches Herunterrutschen der Maschinenverkleidung in die Betriebsposition vermieden. Die Arretiereinrichtung kann beispielsweise einen Klemmmechanismus umfassen und/oder in der Instandhaltungsposition federnd ineinander greifende Befestigungselemente, wie beispielsweise Stege und Nuten.

Eine besonders günstige Ausführungsform der erfindungsgemäßen Behandlungsmaschine umfasst ferner einen Schutzschalter, wie beispielsweise einen Schutzkontakt, der beim Anheben der Hebeschutzverkleidung betätigt wird, um einen Maschinenbetrieb zu verhindern. Dadurch lässt sich ein sicherer Wechsel zwischen dem Maschinenbetrieb und einer Instandhaltungs- oder Reinigungsmaßnahme gewährleisten. Falls die Hebeschutzverkleidung als oberer mechanischer Anschlag für die Maschinenverkleidung wirkt, ist ein zusätzlicher Schutzschalter für die Maschinenverkleidung entbehrlich. Anders gesagt verhindert der Schutzschalter der Hebeschutzverkleidung dann ein Hochschieben der Maschinenverkleidung während einer motorgetriebenen Rotation des Behältertisches. Der Schutzschalter unterbricht zu diesem Zweck beispielsweise einen elektrischen Sicherheitsschaltkreis in der Stromversorgung des zugehörigen Motors.

Vorzugsweise ist die Hebeschutzverkleidung an einer oberen Schienenführung hängend und vertikal verschiebbar befestigt. Dadurch ist der Behältertisch bei angehobener Hebeschutzverkleidung auch direkt unter der Schienführung zugänglich.

Vorzugsweise ist die Maschinenverkleidung entlang vertikaler Führungsprofile verschiebbar. Die korrespondierenden Führungselemente an der Maschinenverkleidung können dann auf einfache Weise hergestellt werden, beispielsweise durch Biegen der Maschinenverkleidung oder durch Befestigen korrespondierender Profile. Derartige Schienenführungen können am Untergestell an mehreren entlang des Maschinenumfangs geeignet verteilten Montagepositionen ausgebildet sein oder befestigt werden.

Einzelne Verkleidungssegmente der Maschinenverkleidung können dann separat hochgeschoben werden, um die Reinigung einzelner Maschinenbereiche zu ermöglichen. Auch lassen sich auf diese Weise mehrere flexibel gegeneinander austauschbare Andockpositionen für Behandlungsaggregate entlang des Maschinenumfangs ausbilden. Beispielsweise wird dann ein einzelnes Segment der Maschinenverkleidung abmontiert und an dessen Stelle ein Behandlungsaggregat angedockt.

Vorzugsweise lässt sich die Hebeschutzverkleidung mittels der Schienenführung so weit anheben, dass die Maschinenverkleidung nach oben von den vertikalen Führungsprofilen abgezogen werden kann. Dies ermöglicht einen besonders einfachen Austausch einzelner Verkleidungssegmente der Maschinenverkleidung.

Vorzugsweise ist die erfindungsgemäße Behandlungsmaschine als Etikettiermaschine ausgebildet.

Eine bevorzugte Ausführungsform der erfindungsgemäßen Behandlungsmaschine ist in der Zeichnung dargestellt. Es zeigen:
- Figur 1: eine Seitenansicht der erfindungsgemäßen Behandlungsmaschine;
- Figur 2: eine Schrägansicht der erfindungsgemäßen Behandlungsmaschine; und
- Figur 3: eine Teilansicht mit einer erfindungsgemäßen Maschinenverkleidung.

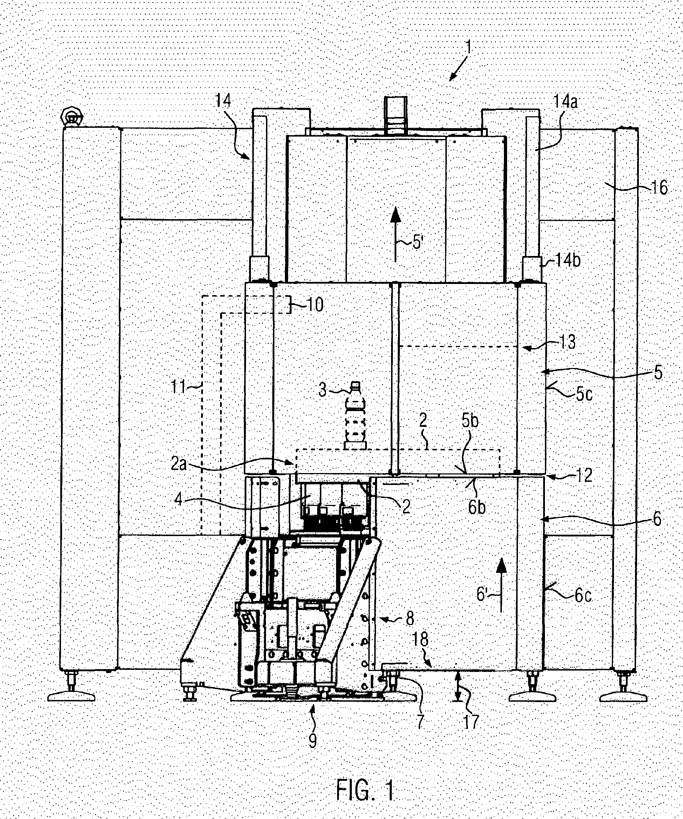

Wie die Figur 1 erkennen lässt, umfasst die erfindungsgemäße Behandlungsmaschine 1 in einer bevorzugten Ausführungsform einen drehbaren Behältertisch 2 zur Behandlung, wie beispielsweise zur Etikettierung, von Behältern 3, wie beispielsweise Getränkeflaschen oder dergleichen. Derartige Behältertische mit umfänglich gleichmäßig verteilten Behandlungspositionen, an denen die Behälter 3 beispielsweise auf Drehtellern stehend gehalten werden, sind an sich bekannt und werden daher im Folgenden nicht näher erläutert. In der Figur 1 ist ein unterer Bereich des Behältertisches 2 mit Motoren 4 für Drehteller zu erkennen. Die übrigen Bereiche des Behältertisches 2 sind von einer seitlich um den Behältertisch 2 ausgebildeten Hebeschutzverkleidung 5 und einer darunter ausgebildeten Maschinenverkleidung 6 verdeckt. Letztere verhindert einen für Bedienpersonal gefährlichen Zugriff auf die umlaufenden Motoren 4 und andere während des Maschinenbetriebs unterhalb des Behältertisches 2 rotierende Komponenten.

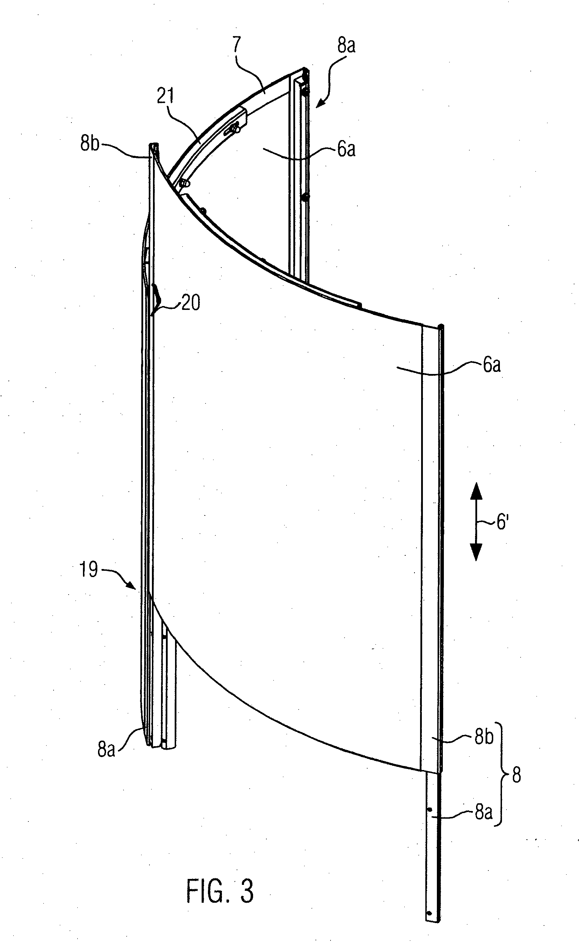

Die Maschinenverkleidung 6 ist an einem insbesondere in der Figur 3 zu erkennenden stationären Untergestell 7 in vertikaler Richtung 6' verschiebbar befestigt. Zu diesem Zweck ist an dem Untergestell 7 eine untere Schienenführung 8 für die Maschinenverkleidung 6 ausgebildet, beispielsweise mit vertikalen Führungsprofilen 8a, in die die Maschinenverkleidung 6 beispielsweise mittels korrespondierender Profile 8b eingreift. Vorzugsweise sind mehrere Führungsprofile 8a entlang des Umfangs der Behandlungsmaschine 1 in geeigneten Maschinenwinkelabständen verteilt ausgebildet, siehe Figur 3.

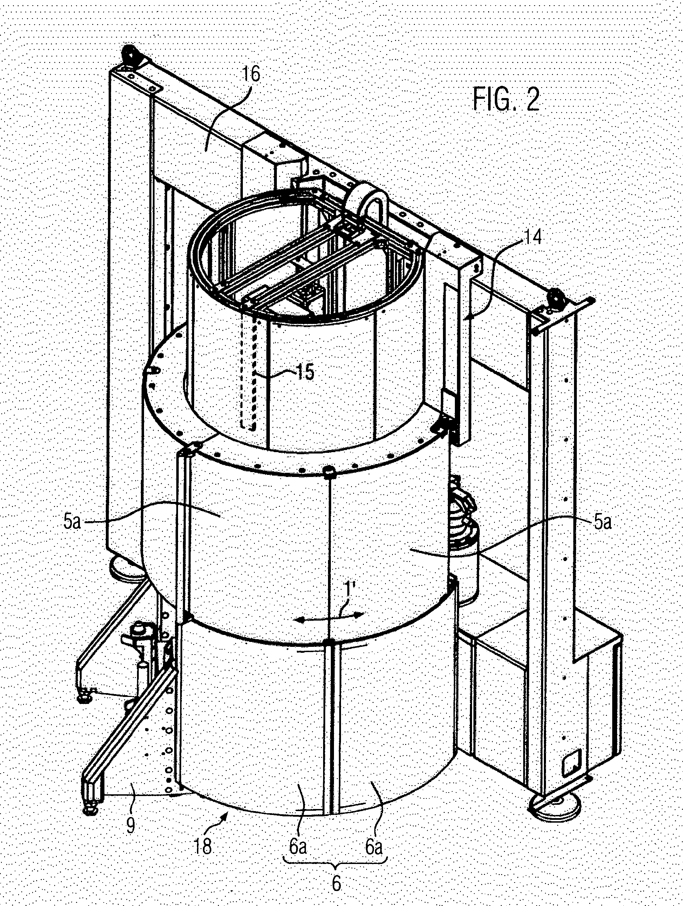

Die Maschinenverkleidung 6 ist entlang des Maschinenumfangs vorzugsweise segmentiert ausgebildet. Die Figur 2 zeigt hierzu beispielhaft zwei in umfänglicher Richtung 1' aneinander grenzende Verkleidungssegmente 6a im Anschluss an eine Andockstation 9 zum Andocken eines Behandlungsaggregats (nicht dargestellt), wie beispielsweise eines Etikettieraggregats.

An der Hebeschutzverkleidung 5 ist vorzugsweise wenigstens ein in der Figur 1 schematisch angedeuteter Schutzschalter 10 ausgebildet, beispielsweise in Form eines elektrischen Schaltkontakts, der einen schematisch angedeuteten elektrischen Sicherheitsschaltkreis 11 unterbricht, sobald die Hebeschutzverkleidung 5 aus einer in der Figur 1 beispielhaft dargestellten unteren Betriebsstellung 12 angehoben wird.

Das Anheben der Hebeschutzverkleidung 5 bis in eine beispielhaft angedeutete obere Instandhaltungsposition 13 wird durch eine Schienenführung 14 mit stationären Führungsschienen 14a und beweglichen Schlitten 14b oder dergleichen ermöglicht. Alternativ ist eine in der Figur 2 schematisch angedeutete Variante mit einer radial innerhalb der Hebeschutzverkleidung 5 und der Maschinenverkleidung 6 ausgebildeten Schienenführung 15 denkbar. In beiden Fällen lässt sich die Hebeschutzverkleidung 5 in vertikaler Richtung 6' verschieben, um den Behältertisch 2 zur Reinigung, Umrüstung, Instandhaltung oder dergleichen von der Seite her zugänglich zu machen.

Die Schienenführungen 14, 15 sind jeweils an einem oberen Rahmen 16 verdrehfest montiert. Hierbei ist die Hebeschutzverkleidung 5 hängend an der Schienenführung 14, 15 montiert, derart dass der Behältertisch 2 bei angehobener Hebeschutzverkleidung 5 auch unterhalb der Schienführungen 14, 15 von der Seite her zugänglich ist. Darunter ist insbesondere zu verstehen, dass sich an den Schienenführungen 14, 15 ausgebildete stationäre Führungsschienen nicht bis in einen Bereich 2a seitlich oder unterhalb des Behältertisches 2 erstrecken.

Wie insbesondere die Figur 2 erkennen lässt, sind die Hebeschutzverkleidung 5 und die Maschinenverkleidung 6 in der Draufsicht als Verkleidungssegmente 5a, 6a in Form einander überlappender Kreisringsegmente oder Kreisbögen ausgebildet. Besonders vorteilhaft ist eine Ausgestaltung, bei der eine untere Stirnfläche 5b der Hebeschutzverkleidung 5 mit einer oberen Stirnfläche 6b der Maschinenverkleidung 6 überlappt. Vorteilhaft ist ferner ein bündiger Übergang der Außenseiten 5c, 6c der Hebeschutzverkleidung 5 und der Maschinenverkleidung 6.

Aufgrund einander in der Draufsicht überlappender Querschnitte der Hebeschutzverkleidung 5 und der Maschinenverkleidung 6 wirkt die Hebeschutzverkleidung 5 als ein oberer mechanischer Anschlag für die Maschinenverkleidung 6. Darunter ist zu verstehen, dass sich die Maschinenverkleidung 6 nicht gegen den Widerstand der abgesenkten Hebeschutzverkleidung 5 nach oben schieben lässt. Folglich ist ein separater Schutzschalter und/oder Sicherheitsschaltkreis für die Maschinenverkleidung 6 entbehrlich. Nichtsdestoweniger wären separate Schutzschalter für die Maschinenverkleidung 6 als ergänzende Sicherheitsmaßnahme denkbar.

Obwohl der Schutzschalter 10 nicht unmittelbar von der Maschinenverkleidung 6 betätigt wird sondern mittels der Hebeschutzverkleidung 5, lässt sich ein Maschinenbetrieb zuverlässig verhindern, sobald ein vorgegebener Höchstabstand 17 zwischen der Maschinenverkleidung 6 und der Standfläche für die Behandlungsmaschine 1 überschritten wird. Der Höchstabstand 17 ist beispielsweise entsprechend jeweils anzuwendender Sicherheitsvorschriften vorgegeben. Folglich lässt sich mit dem wenigstens einen Schutzschalter 10 sowohl ein unzulässiger seitlicher Zugang zum Behältertisch 2 im Bereich der Hebeschutzverkleidung 5 als auch ein unzulässiger Zugang zu unterhalb des Behältertisches 2 umlaufenden Antriebskomponenten oder dergleichen verhindern.

Die umfängliche Segmentierung der Hebeschutzverkleidung 5 und der Maschinenverkleidung 6 erleichtert das flexible Andocken von Behandlungsaggregaten in unterschiedlichen Bereichen entlang des Maschinenumfangs. Zu diesem Zweck können in geeigneten Winkelabständen umfänglich verteilte Montagepositionen für die Führungsschienen 8a vorhanden sein. Die Hebeschutzverkleidung 5 lässt sich vorzugsweise als Ganzes an der Schienenführung 14, 15 hoch schieben. Nichtsdestoweniger können mit Hilfe der einzelnen Verkleidungssegmente 5a Aggregatausschnitte (nicht gezeigt) mit Abdeckungen oder dergleichen in der Hebeschutzverkleidung 5 ausgebildet werden. Demgegenüber lassen sich die einzelnen umfänglichen Verkleidungssegmentes 6a der Maschinenverkleidung 6 vorzugsweise separat anheben. Das dann vergleichsweise geringe Gewicht der einzelnen Verkleidungssegmente 6a erleichtert das Anheben und/oder das Arretieren der angehobenen Maschinenverkleidung 6.

In den Figuren 1 und 2 ist die Maschinenverkleidung 6 jeweils in einer abgesenkten Betriebposition 18 dargestellt. Demgegenüber ist ein Verkleidungssegment 6a der Maschinenverkleidung 6 in der Figur 3 beispielhaft in einer angehobenen Instandhaltungsposition 19 dargestellt. Diese ermöglicht den Zugriff auf einen Bereich unterhalb der Behandlungsmaschine 1 zu Reinigungszwecken oder dergleichen.

Um die Maschinenverkleidung 6 in der oberen Instandhaltungsstellung 19 zu arretieren, kann beispielsweise eine lediglich schematisch angedeutete Arretiereinrichtung 20 in Form eines federnd gelagerten Schnappmechanismus, eines Klemmmechanismus oder dergleichen vorhanden sein. In der unteren Betriebposition 18 ist eine Arretierung der Maschinenverkleidung 6 dagegen entbehrlich. Dies begünstigt ein werkzeugloses Anheben der Maschinenverkleidung 6. Die vertikal verschiebbare Maschinenverkleidung 6 ermöglicht insbesondere eine einfache Reinigung unterhalb der erfindungsgemäßen Behandlungsmaschine 1. Die in der Draufsicht runde Form der Hebeschutzverkleidung 5 und der Maschinenverkleidung 6 erleichtert eine flexible Anpassung der Behandlungsmaschine 1 an unterschiedliche Behandlungssituationen und/oder das Andocken unterschiedlicher Behandlungsaggregate. Insbesondere für Etikettiermaschinen, in denen gegebenenfalls unterschiedliche Etiketten und/oder Behälter verarbeitet werden müssen, ermöglicht die segmentierte und modulare Konstruktion der Maschinenverkleidung 6 eine flexible Anpassung an die jeweiligen Produktionsbedingungen unter gleichzeitig verbessertem Zugriff auf Bereiche unterhalb der Behandlungsmaschine 1. Somit lassen sich insbesondere heruntergefallene Etiketten, Etikettenbestandteile, Glassplitter oder dergleichen schnell entfernen und die Effizienz des Anlagenbetriebs steigern.

## Patentansprüche

1. Behandlungsmaschine für Behälter (3), insbesondere Flaschen, mit:
- einem drehbaren Behältertisch (2);
- einer seitlich am Behältertisch ausgebildeten Hebeschutzverkleidung (5); und
- einer unterhalb der Hebeschutzverkleidung an einem Untergestell (7) befestigten seitlichen Maschinenverkleidung (6),
**dadurch gekennzeichnet, dass**
sich die Maschinenverkleidung an dem Untergestell in vertikaler Richtung (6') verschieben lässt.

2. Behandlungsmaschine nach Anspruch 1, wobei die Hebeschutzverkleidung (5) als oberer mechanischer Anschlag für die Maschinenverkleidung (6) ausgebildet ist.

3. Behandlungsmaschine nach Anspruch 1 oder 2, wobei eine obere Stirnfläche (6b) der Maschinenverkleidung (6) in der Draufsicht mit einer unteren Stirnfläche (5b) der Hebeschutzverkleidung (5) überlappt.

4. Behandlungsmaschine nach wenigstens einem der vorigen Ansprüche, wobei die Hebeschutzverkleidung (5) und die Maschinenverkleidung (6) in der Draufsicht in Form von Kreisbögen ausgebildet sind.

5. Behandlungsmaschine nach wenigstens einem der vorigen Ansprüche, wobei sich die Maschinenverkleidung (6) in umfänglicher Richtung (1') aus wenigstens zwei separat in vertikaler Richtung (6') verschiebbaren Verkleidungssegmenten (6a) zusammen setzt.

6. Behandlungsmaschine nach wenigstens einem der vorigen Ansprüche, wobei die Maschinenverkleidung (6) in einer unteren Betriebsposition (18) einen vorgegebenen Sicherheitsabstand (17), insbesondere von höchstens 10 cm, zur Standfläche nicht überschreitet.

7. Behandlungsmaschine nach wenigstens einem der vorigen Ansprüche, wobei die Maschinenverkleidung (6) werkzeuglos aus einer unteren Betriebsposition (18) nach oben geschoben werden kann.

8. Behandlungsmaschine nach wenigstens einem der vorigen Ansprüche, wobei die Maschinenverkleidung (6) bis in eine obere Instandhaltungsposition (19) verschoben werden kann.

9. Behandlungsmaschine nach Anspruch 8, ferner mit einer Arretierungseinrichtung zum Arretieren der Maschinenverkleidung (6) in der oberen Instandhaltungsposition (19).

10. Behandlungsmaschine nach wenigstens einem der vorigen Ansprüche, ferner mit einem Schutzschalter (10), der beim Anheben der Hebeschutzverkleidung (5) betätigt wird, um einen Maschinenbetrieb zu verhindern.

11. Behandlungsmaschine nach wenigstens einem der vorigen Ansprüche, wobei die Hebeschutzverkleidung (5) an einer oberen Schienenführung (14, 15) hängend und vertikal verschiebbar befestigt ist.

12. Behandlungsmaschine nach wenigstens einem der vorigen Ansprüche, wobei die Maschinenverkleidung (6) entlang stationärer Führungsprofile (8) vertikal verschiebbar ist.

13. Behandlungsmaschine nach Anspruch 11 und 12, wobei sich die Hebeschutzverkleidung (5) mittels der Schienenführung (14, 15) so weit anheben lässt, dass die Maschinenverkleidung (6) nach oben von den vertikalen Führungsprofilen (8) abgezogen werden kann.

14. Behandlungsmaschine nach wenigstens einem der vorigen Ansprüche, die als Etikettiermaschine ausgebildet ist.

## Claims

1. A treatment machine for containers (3), in particular bottles, comprising:
- a rotatable container table (2);
- a lift guard cover (5) formed laterally on the container table; and
- a lateral machine cover (6) secured to a lower frame (7) below the lift guard cover,
**characterized in that**
the machine cover is displaceable in a vertical direction (6') on the lower frame.

2. The treatment machine according to claim 1, wherein the lift guard cover (5) is configured as an upper mechanical stop for the machine cover (6).

3. The treatment machine according to claim 1 or 2, wherein an upper end face (6b) of the machine cover (6) overlaps with a lower end face (5b) of the lift guard cover (5), when seen from above.

4. The treatment machine according to at least one of the preceding claims, wherein the lift guard cover (5) and the machine cover (6) are configured in the form of circular arcs, when seen from above.

5. The treatment machine according to at least one of the preceding claims, wherein the machine cover (6) is, in the circumferential direction (1'), composed of at least two cover segments (6a), which are separately displaceable in a vertical direction (6').

6. The treatment machine according to at least one of the preceding claims, wherein, when occupying a lower operating position (18), the machine cover (6) does not extend beyond a predetermined safety distance (17) from the floor area on which the machine stands, said safety distance being in particular a distance of not more than 10 cm.

7. The treatment machine according to at least one of the preceding claims, wherein the machine cover (6) can be pushed upwards from a lower operating position (18) without using any tool.

8. The treatment machine according to at least one of the preceding claims, wherein the machine cover (6) can be displaced up to and into an upper maintenance position (19).

9. The treatment machine according to claim 8, further comprising a locking unit for locking the machine cover (6) at the upper maintenance position (19).

10. The treatment machine according to at least one of the preceding claims, further comprising a protective switch (10), which is operated when the lift guard cover (5) is raised, so as to prevent operation of the machine.

11. The treatment machine according to at least one of the preceding claims, wherein the lift guard cover (5) is secured to an upper rail guide (14, 15) in a suspended and vertically displaceable fashion.

12. The treatment machine according to at least one of the preceding claims, wherein the machine cover (6) is vertically displaceable along stationary guide profiles (8).

13. The treatment machine according to claims 11 and 12, wherein the lift guard cover (5) can be raised by means of the rail guide (14, 15) to such an extent that the machine cover (6) can be pulled off the vertical guide profiles (8) in an upward direction.

14. The treatment machine according to at least one of the preceding claims, the treatment machine being configured as a labeling machine.

## Revendications

1. Machine de traitement pour récipients ou contenants (3), notamment des bouteilles, comprenant :
- une table de contenants (2) rotative ;
- un capotage de protection relevable (5) formé latéralement sur la table de contenants ; et
- un capotage de machine (6) latéral, fixé sous le capotage de protection relevable, sur un bâti inférieur (7),
**caractérisée en ce que**
le capotage de machine peut coulisser sur le bâti inférieur, dans une direction verticale (6').

2. Machine de traitement selon la revendication 1, dans laquelle le capotage de protection relevable (5) est réalisé en tant que butée mécanique supérieure pour le capotage de machine (6).

3. Machine de traitement selon la revendication 1 ou la revendication 2, dans laquelle une surface frontale supérieure (6b) du capotage de machine (6) est en chevauchement avec une surface frontale inférieure (5b) du capotage de protection relevable (5), en vue de dessus.

4. Machine de traitement selon l'une au moins des revendications précédentes, dans laquelle le capotage de protection relevable (5) et le capotage de machine (6) présentent une configuration en forme d'arc de cercle, en vue de dessus.

5. Machine de traitement selon l'une au moins des revendications précédentes, dans laquelle le capotage de machine (6) se compose, dans la direction périphérique (1'), d'au moins deux segments de capotage (6a) pouvant coulisser séparément dans la direction verticale (6').

6. Machine de traitement selon l'une au moins des revendications précédentes, dans laquelle le capotage de machine (6), dans une position inférieure de fonctionnement (18), ne dépasse pas une distance de sécurité (17) prescrite, notamment d'au plus 10 cm, par rapport à la surface d'appui au sol.

7. Machine de traitement selon l'une au moins des revendications précédentes, dans laquelle il est possible de faire coulisser, sans outil, le capotage de machine (6) vers le haut, à partir d'une position inférieure de fonctionnement (18).

8. Machine de traitement selon l'une au moins des revendications précédentes, dans laquelle il est possible de faire coulisser le capotage de machine (6) jusqu'à une position supérieure d'entretien ou de maintenance (19).

9. Machine de traitement selon la revendication 8, comprenant, par ailleurs, un dispositif d'arrêt ou de blocage pour bloquer ou arrêter le capotage de machine (6) dans la position supérieure d'entretien ou de maintenance (19).

10. Machine de traitement selon l'une au moins des revendications précédentes, comprenant, par ailleurs, un interrupteur ou commutateur de sécurité (10), qui est actionné lors du relevage du capotage de protection relevable (5), pour empêcher le fonctionnement de la machine.

11. Machine de traitement selon l'une au moins des revendications précédentes, dans laquelle le capotage de protection relevable (5) est fixé de manière suspendue et verticalement coulissante sur un système supérieur de rails de guidage (14, 15).

12. Machine de traitement selon l'une au moins des revendications précédentes, dans laquelle le capotage de machine (6) peut coulisser verticalement le long de profilés de guidage (8) stationnaires.

13. Machine de traitement selon les revendications 11 et 12, dans laquelle le capotage de protection relevable (5) peut être relevé à l'aide du système de rails de guidage (14, 15) d'une distance telle que le capotage de machine (6) puisse être retiré des profilés de guidage (8) verticaux.

14. Machine de traitement selon l'une au moins des revendications précédentes, qui est réalisée en tant que machine d'étiquetage.
